Europäisches Patentamt

European Patent Office

Office européen des brevets

(19)

(11) Numéro de publication : **0 068 970**
**B1**

(12)

# FASCICULE DE BREVET EUROPÉEN

(45) Date de publication du fascicule du brevet :
**20.02.85**

(21) Numéro de dépôt : **82401087.0**

(22) Date de dépôt : **15.06.82**

(51) Int. Cl.⁴ : **H 02 M   3/335**

---

(54) **Dispositif stabilisé d'asservissement par tout ou rien à période constante, et dispositif d'alimentation électrique comportant un tel dispositif d'asservissement.**

---

(30) Priorité : **16.06.81 FR 8111839**

(43) Date de publication de la demande :
**05.01.83 Bulletin 83/01**

(45) Mention de la délivrance du brevet :
**20.02.85 Bulletin 85/08**

(84) Etats contractants désignés :
**DE GB**

(56) Documents cités :
**DE-A- 2 429 566**
**DE-A- 2 445 034**
**DE-A- 2 621 763**
**FR-A- 2 387 474**
**US-A- 3 818 306**
**US-A- 4 032 830**

(73) Titulaire : **COMPAGNIE D'INFORMATIQUE MILITAIRE SPATIALE ET AERONAUTIQUE**
**25, rue de Courcelles**
**F-75008 Paris (FR)**

(72) Inventeur : **Arnould, Guy**
**THOMSON-CSF SCPI 173, bld Haussmann**
**F-75379 Paris Cedex 08 (FR)**
Inventeur : **Chartier, Alain**
**THOMSON-CSF SCPI 173, bld Haussmann**
**F-75379 Paris Cedex 08 (FR)**

(74) Mandataire : **Benoit, Monique et al**
**THOMSON-CSF SCPI 173, Bld Haussmann**
**F-75379 Paris Cedex 08 (FR)**

---

Jouve, 18, rue St-Denis, 75001 Paris, France

## Description

La présente invention a pour objet un dispositif assurant un asservissement stabilisé par tout ou rien, à période constante, et plus précisément la stabilisation de l'asservissement d'une fonction continue, commandée par un signal tout ou rien, de période constante. Un tel dispositif est notamment applicable à une alimentation électrique.

Ainsi qu'il est connu, une telle fonction continue varie autour d'une valeur moyenne, suivant l'état de l'organe de commande (vanne, commutateur, etc.), et la régulation consiste à asservir la valeur maximale de cette fonction à une valeur donnée, en général sensiblement constante, dite de consigne. Il existe toutefois des problèmes de stabilité de l'asservissement.

Par ailleurs, dans certains dispositifs d'alimentation électrique où la tension de sortie est régulée, il existe différents impératifs tels que la puissance désirée, l'encombrement et le coût qui conduisent à la modularité et la mise en parallèle de certains modules, comme décrit par exemple dans la demande de brevet français n° 79-31489 au nom de la CIMSA, qui créent des difficultés au niveau de la régulation de cette tension de sortie.

La présente invention a pour objet un dispositif d'asservissement à la fois stable et adapté à la mise en parallèle de modules constituant un dispositif d'alimentation.

Plus précisément, l'invention concerne un dispositif caractérisé par le fait qu'il comporte :

— des moyens de génération d'un signal en dents de scie de période variable ;

— un comparateur du signal à asservir au signal en dents de scie, fournissant un signal comportant une série d'impulsions correspondant aux instants où la valeur du signal à asservir atteint celle du signal en dents de scie, ces impulsions étant fournies aux moyens de génération du signal en dents de scie et déterminant sa période ;

— un circuit bistable recevant un signal de période constante et les impulsions précédentes, fournissant un signal de commande du signal à asservir, de même période constante, en créneaux dont la durée est déterminée par lesdites impulsions.

L'invention sera mieux comprise à l'aide de la description ci-après, donnée à titre d'exemple non limitatif et illustrée par les dessins annexés sur lesquels :

la figure 1 représente un premier mode de réalisation du dispositif d'asservissement selon l'invention ;

la figure 2, a à f, représente des diagrammes de signaux susceptibles d'exister en différents points du dispositif de la figure précédente ;

la figure 3 représente un détail de réalisation du dispositif de la figure 1 ;

la figure 4 représente un deuxième mode de réalisation du dispositif d'asservissement selon l'invention ;

la figure 5 représente un détail de réalisation du dispositif de la figure précédente ;

la figure 6 représente un mode de réalisation du dispositif d'alimentation selon l'invention.

Sur ces différentes figures, les mêmes références se rapportent aux mêmes éléments.

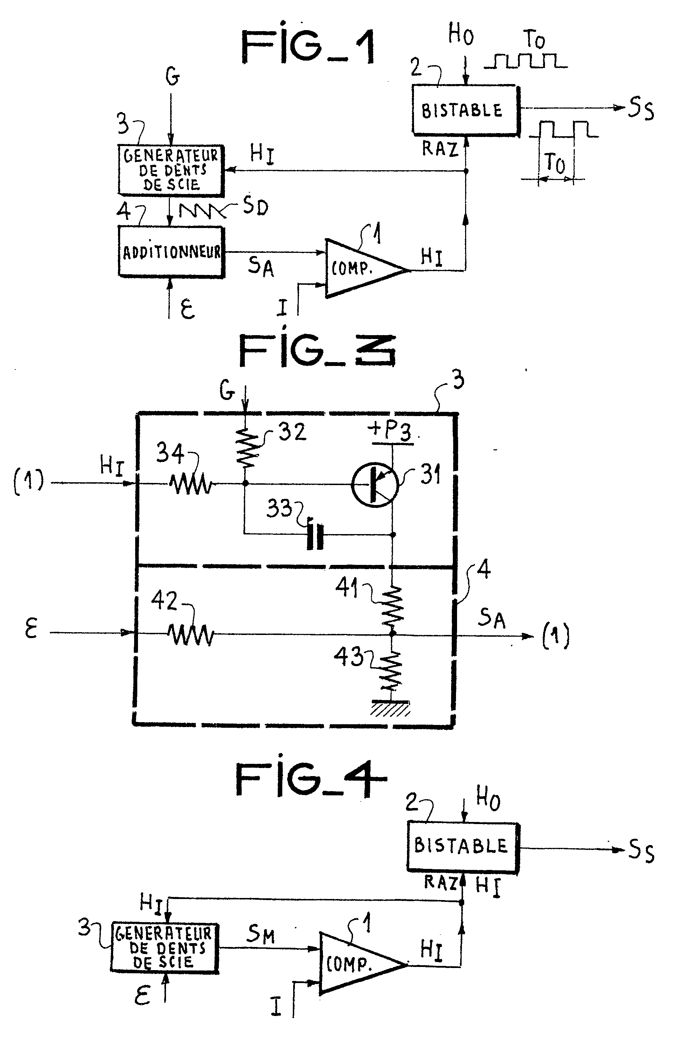

Sur la figure 1, on a représenté un comparateur 1 recevant d'une part un signal I à réguler et d'autre part un signal d'asservissement $S_A$ ; le comparateur 1 fournit un signal $H_I$, constitué par une série d'impulsions correspondant aux instants où la valeur du signal I atteint celle du signal $S_A$. Le signal $H_I$ est dirigé d'une part vers un circuit bistable 2 (entrée de remise à zéro RAZ) et d'autre part vers un générateur de dents de scie 3. Le circuit bistable 2 reçoit d'une part un signal d'horloge $H_o$ de période $T_o$ et d'autre part le signal $H_I$ qui provoque sa remise à zéro ; il fournit en sortie un signal $S_s$ de commande du signal I à asservir, qui est un signal en créneaux de pseudo période $T_o$, la durée (θ) des créneaux étant déterminée par le signal $H_I$.

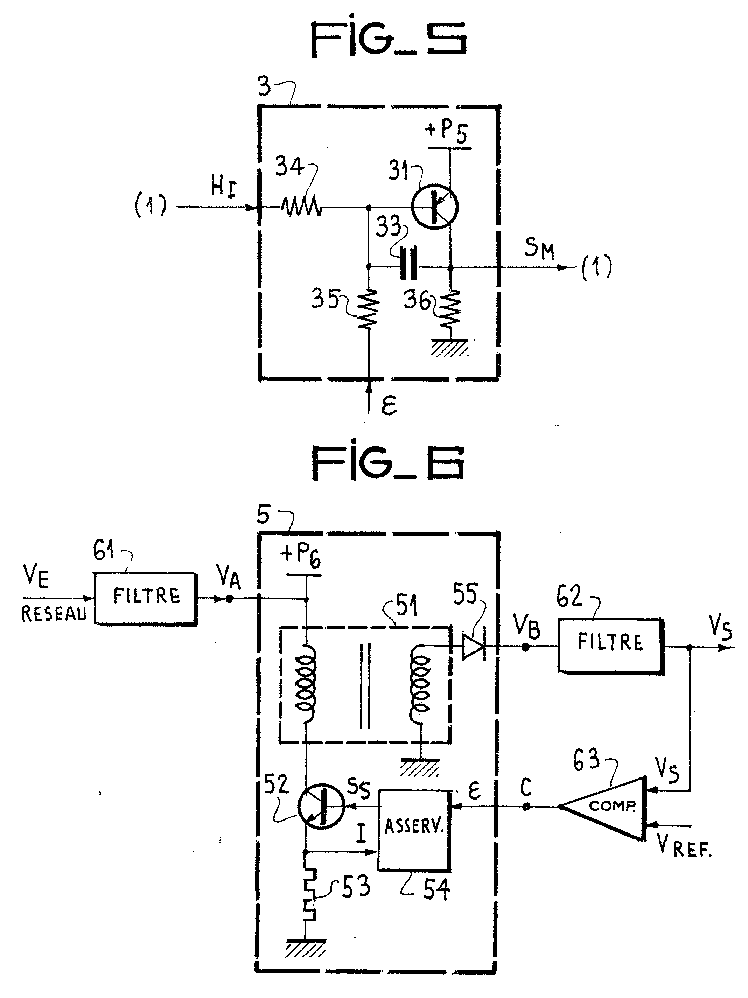

Le générateur de dents de scie 3 produit un signal $S_D$, qui est un signal en dents de scie de pente constante mais dont la période est déterminée par le signal $H_I$ : chacune des impulsions constituant le signal $H_I$ déclenche le front montant d'une dent de scie. Ce générateur 3 peut être réalisé par exemple à l'aide d'un intégrateur, recevant une grandeur physique G constante, telle que courant ou tension, et intégrant cette grandeur entre deux impulsions du signal $H_I$ ; une telle réalisation est décrite figure 3.

Dans le mode de réalisation représenté sur la figure, le signal en dents de scie $S_D$ n'est pas directement comparé au signal à réguler I mais il lui est ajouté, par l'intermédiaire d'un additionneur 4, une grandeur constante qui est un signal de consigne, noté ε, pour constituer le signal $S_A$. Il est à noter que le signal ε d'une part n'est pas nécessaire et d'autre part, n'est pas forcément constant.

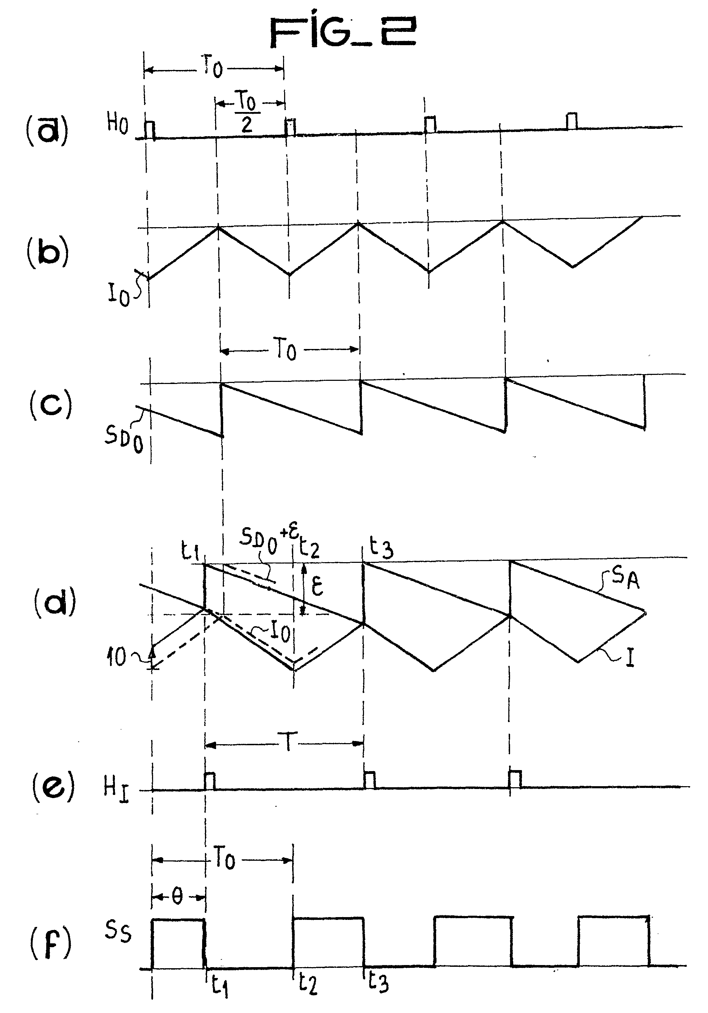

Le fonctionnement du dispositif de la figure 1 est expliqué à l'aide des diagrammes a à f de la figure 2, représentant l'évolution en fonction du temps de différents signaux susceptibles d'exister en différents points de ce dispositif.

Le premier de ces diagrammes (2a) représente le signal d'horloge $H_o$, qui présente périodiquement (période $T_o$) des impulsions en forme de créneaux. Dans le contexte décrit ci-après de la régulation d'une grandeur continue commandée par un signal tout ou rien de période constante $T_o$ est cette période constante ; le signal de commande tout ou rien (non représenté) est un signal en créneaux de période $T_o$, la durée des créneaux étant par exemple de $T_o/2$.

Le diagramme 2b représente à titre d'exemple un signal à réguler tel qu'un courant I évoluant autour d'une valeur moyenne suivant l'état du signal de commande décrit ci-dessus, noté $I_o$ en l'absence de perturbations. Il s'agit alors d'un signal de période $T_o$, de pente constante alterna-

tivement positive et négative, la remontée du signal $I_o$ étant synchronisée avec une impulsion du signal $H_o$. Il apparaît que la valeur de crête de ce signal est constante.

Le diagramme 2c représente le signal en dents de scie produit par le générateur 3, noté $S_{Do}$, toujours en l'absence de perturbations. Il s'agit d'un signal de même période $T_o$ que le signal I, de pente constante, dont les fronts de montée sont synchronisés avec les maximas du signal I et donc déphasés (par exemple en opposition de phase dans l'exemple représenté) par rapport au signal $H_o$.

Le diagramme 2d représente l'asservissement par le signal $S_A$ de la valeur de crête d'un signal I perturbé. Sur ce diagramme, on a représenté en traits pointillés le début du signal $I_o$ non perturbé, et le signal I différant du précédent par une perturbation représentée par une flèche 10. Le signal $S_A$ est constitué par le signal $S_{Do}$ auquel on a rajouté la grandeur $\varepsilon$. Ainsi qu'il est dit ci-dessus, la valeur de crête du signal I est asservie au signal $S_A$, c'est-à-dire que lorsque la crête du signal I atteint la valeur du signal $S_A$ (instant $t_1$ sur la figure), la pente du signal I change de sens jusqu'au prochain top de l'horloge $H_o$ (instant $t_2$). En même temps que la pente du signal I change de sens ($t_1$), le signal $S_A$ revient à sa valeur de crête comme représenté sur la figure et se distingue alors du signal $S_{Do}(+ \varepsilon)$ précédent en l'absence de perturbations. A cet instant $t_1$, le comparateur 1 de la figure 1 délivre une impulsion comme représenté sur le diagramme 2e, qui représente le signal $H_l$, et c'est cette impulsion qui, appliquée au générateur de dents de scie 3, permet au signal $S_A$ de remonter vers sa valeur de crête. Pour simplifier, on a représenté au même instant $t_1$ le changement de pente du signal I, la génération de l'impulsion du signal $H_l$ et la remontée du signal $S_D$ ; il est clair que dans la pratique, la remontée du signal $S_D$ est légèrement décalée par rapport à l'instant $t_1$ mais ce phénomène n'a pas d'influence sensible sur le résultat et il est donc négligé dans ce qui suit. Après l'instant $t_1$, le signal $S_A$ décroît jusqu'à un instant $t_3$, postérieur à $t_2$, où le signal I est à nouveau égal au signal $S_A$ : à ce moment, les effets sont les mêmes qu'à l'instant $t_1$ et il est engendré une impulsion $H_l$. Il apparaît que la « période » des signaux $S_A$ ou $H_l$, notée T, n'est pas constante mais varie autour de $T_o$.

Le diagramme 2f représente le signal de sortie $S_s$ du dispositif, qui est un signal en créneaux de pseudo période $T_o$, celle-ci étant donnée par le signal $H_o$, et la durée (notée $\theta$) des créneaux est fournie par le signal $H_l$ qui provoque la remise à zéro du circuit bistable 2.

Le dispositif tel que décrit figures 1 et 2 permet donc de fournir un signal S, constituant le signal de commande de la fonction continue I à asservir. Ce signal $S_s$ est un signal par tout ou rien, pseudo périodique de période constante ($T_o$) d'amplitude donnée, dont la seule grandeur variable est son rapport de forme $\theta/T$.

La figure 3 représente un mode de réalisation du générateur de dents de scie 3 et du sommateur 4 de la figure 1.

Le générateur 3 est un intégrateur d'une grandeur physique G, qui peut être par exemple un courant ; il comporte un transistor bipolaire de type PNP 31, connecté par son émetteur à un potentiel de polarisation $+ P_3$, et recevant la grandeur G par l'intermédiaire d'une résistance 32 sur sa base. Le signal $H_l$ émanant du comparateur 1 est fourni par l'intermédiaire d'une résistance 34 à la base du transistor 31. Le collecteur de ce transistor est réuni à sa base par l'intermédiaire d'un condensateur 33. Le collecteur constitue la connexion de sortie de l'intégrateur 3.

Le sommateur 4 est constitué de trois résistances 41, 42, 43, avant un point commun qui constitue le point de sortie du signal $S_A$ destiné au comparateur 1. Le signal de sortie de l'intégrateur 3 est appliqué à l'autre borne de la résistance 41, le signal $\varepsilon$ à l'autre borne de la résistance 42, et l'autre borne de la résistance 43 est reliée à la masse.

La figure 4 représente un deuxième mode de réalisation du dispositif selon l'invention dans lequel on retrouve, connectés de façon analogue à ce qui est montré sur la figure 1, le comparateur 1, le circuit bistable 2 et le générateur de dents de scie 3.

La différence entre les deux figures tient au fait que le signal n'est pas additionné au signal en dents de scie $S_D$ mais module la pente de la dent de scie, ce signal modulé, noté $S_M$, étant appliqué au comparateur 1 à la place du signal $S_A$. Pour le reste, le fonctionnement du dispositif est identique à celui de la figure 1.

La figure 5 représente le détail de la réalisation du circuit 3 dans le cas de la figure 4.

On retrouve le transistor 31 qui maintenant reçoit sur sa base le signal $\varepsilon$ par l'intermédiaire d'une résistance 35, la base de ce transistor recevant par ailleurs et comme précédemment le signal $H_l$ par l'intermédiaire d'une résistance 34, une capacité 33 réunissant la base et le collecteur du transistor 31, ce collecteur étant par ailleurs relié à la masse par l'intermédiaire d'une résistance 36 et constituant la connexion de sortie du dispositif 3 qui délivre le signal $S_M$.

La figure 6 représente un mode de réalisation d'un dispositif d'alimentation électrique selon l'invention, utilisant un dispositif d'asservissement tel que décrit ci-dessus dans l'un ou l'autre de ses modes de réalisation.

Ainsi qu'il est connu, une alimentation électrique d'un système électronique constitue l'interface entre une source d'énergie, qui peut être un réseau fournissant une tension continue ou alternative, de caractéristiques variables, et un système électronique utilisant des tensions continues, dont les valeurs peuvent être très variables avec les systèmes ainsi que les puissances globales requises.

On a représenté sur la figure 6 un dispositif de filtrage 61, recevant la tension $V_E$ fournie par le réseau, qui a pour objet l'isolation de la tension d'entrée par le filtrage d'un certain nombre de signaux parasites, notamment de signaux transitoires.

La tension $V_A$ issue du filtre 61 est fournie à un ensemble convertisseur 5, dont la fonction est de convertir la tension $V_A$ en un signal $V_B$ présentant, après filtrage dans un filtre 62, les caractéristiques requises par le système électronique utilisateur ; ce signal de sortie est noté $V_s$.

Le convertisseur 5 comporte le dispositif d'asservissement précédent, repéré 54, qui reçoit le signal après prélèvement de la tension de sortie $V_S$ et sa comparaison dans un comparateur 63 à une tension de référence $V_{REF}$. Le convertisseur 5 comporte encore un transformateur 51, dont le primaire est relié à une tension de polarisation $+ P_6$ et reçoit le signal $V_A$, et dont le secondaire fournit par l'intermédiaire d'une diode 55 le signal $V_B$. L'autre extrémité du secondaire est reliée à la masse. L'autre extrémité du primaire du transformateur 51 est reliée au collecteur d'un transistor bipolaire NPN 52 dont l'émetteur est relié à la masse par l'intermédiaire d'une résistance 53. La base du transistor 52 reçoit le signal $S_s$ fourni par le dispositif 54 ; le signal I est fourni au dispositif 54 par l'émetteur du transistor 52.

Il apparaît ainsi qu'est réalisé dans ce dispositif d'alimentation un double asservissement en tension et en courant, l'asservissement en tension étant réalisé au niveau du comparateur 63, le signal provenant de la comparaison de la tension de sortie à une tension de référence, et l'asservissement en courant est réalisé comme décrit en détail précédemment par un signal de commande régulé ($S_s$) tout ou rien, de pseudo période constante ($T_o$), appliqué à la base du transistor 52, le courant ainsi régulé étant le courant présent sur l'émetteur du transistor 52, représentant le courant circulant dans le primaire.

Le dispositif représenté figure 6 présente en outre l'avantage de se prêter facilement au montage de plusieurs modules convertisseurs tels que 5 en parallèle, comme décrit par exemple dans la demande de brevet français précitée. En effet, ainsi qu'il est connu, lorsqu'on désire augmenter la puissance d'alimentation, il apparaît des difficultés au niveau de la réalisation du filtre, aussi bien sur le plan de la consommation de ceux-ci que de leur encombrement ou de leur volume. Il est ainsi fréquemment plus avantageux de connecter une pluralité de modules convertisseurs en parallèle, ce qui est possible ici aux points A, B et C, où sont respectivement présents les signaux $V_A$, $V_B$ et $\varepsilon$.

## Revendications

1. Dispositif stabilisé d'asservissement par tout ou rien à période constante ($T_o$), d'un signal (I), caractérisé par le fait qu'il comporte :
— des moyens de génération (3) d'un signal en dents de scie ($S_D$, $S_M$) de période (T) variable ;
— un comparateur (1) du signal à asservir (I) au signal en dents de scie, fournissant un signal ($H_I$), comportant une série d'impulsions correspondant aux instants où la valeur du signal à asservir (I) atteint celle du signal en dents de scie ($S_D$, $S_M$), ces impulsions étant fournies aux moyens de génération (3) du signal en dents de scie et déterminant sa période (T) ;
— un circuit bistable (2) recevant un signal ($H_o$) de période constante ($T_o$) et les impulsions précédentes ($H_I$), fournissant un signal de commande ($S_s$) du signal à asservir (I), de même période constante ($T_o$), en créneaux dont la durée ($\theta$) est déterminée par lesdites impulsions ($H_I$).

2. Dispositif selon la revendication 1, caractérisé par le fait que les moyens de génération (3) d'un signal en dents de scie ($S_D$, $S_M$) comportent un intégrateur.

3. Dispositif selon l'une des revendications précédentes, caractérisé par le fait qu'il comporte en outre des moyens d'addition (4) d'un signal de consigne ($\varepsilon$) au signal en dents de scie ($S_D$), le signal résultant ($S_A$) étant appliqué au comparateur (1).

4. Dispositif selon les revendications 2 et 3, caractérisé par le fait que l'intégrateur reçoit un signal constant (G) qu'il intègre entre des instants définis par le signal comportant une série d'impulsions ($H_I$).

5. Dispositif selon la revendication 2, caractérisé par le fait que l'intégrateur reçoit un signal de consigne ($\varepsilon$) qu'il intègre entre des instants définis par le signal comportant une série d'impulsions ($H_I$).

6. Dispositif d'alimentation électrique, caractérisé par le fait qu'il comporte un dispositif d'asservissement selon l'une des revendications précédentes.

7. Dispositif d'alimentation selon la revendication 6, relié à une source d'énergie et fournissant une tension de sortie régulée ($V_S$), caractérisé par le fait qu'il comporte un module convertisseur (5), relié à la source d'énergie ($V_E$), comportant un transformateur (51) dont le primaire est relié à un transistor (52) commandé par le dispositif d'asservissement (54), le secondaire du transformateur (51) fournissant la tension de sortie ($V_S$), le dispositif d'asservissement recevant un signal (I) représentant le courant circulant dans le primaire.

8. Dispositif d'alimentation selon la revendication 7, caractérisé par le fait que le dispositif d'asservissement (54) reçoit en outre un signal constituant un signal de consigne ($\varepsilon$), obtenu par comparaison de la tension de sortie ($V_s$) avec une valeur de référence ($V_{REF}$).

## Claims

1. A stabilized device for constant-period ($T_o$) binary regulation of a signal (I), characterized in that it comprises :
— means (3) for generating a sawtooth signal ($S_D$, $S_M$) having a variable period (T),
— a comparator (1) for comparing the signal (I) to be regulated with the sawtooth signal ($S_D$, $S_M$)

and for delivering a signal ($H_l$) consisting of a series of pulses corresponding to the instants at which the value of the signal (I) to be regulated attains the value of the sawtooth signal ($S_D$, $S_M$), said pulses being delivered to the sawtooth-signal generating means (3) for determining the period (T) of said sawtooth signal,

— a bistable circuit (2) receiving a signal ($H_o$) of constant period ($T_o$) as well as the preceding pulses ($H_l$) and delivering a control signal ($S_s$) which produces action on the signal to be regulated and has the same constant period ($T_o$), said control signal being in the form of square waves whose time-duration ($\theta$) is determined by said pulses ($H_l$).

2. A device according to claim 1, characterized in that the means (3) for generating a sawtooth signal ($S_D$, $S_M$) comprise an integrator.

3. A device according to one of the preceding claims, characterized in that it further comprises means (4) for adding an index signal ($\epsilon$) to the sawtooth signal ($S_D$), the resulting signal ($S_A$) being applied to the comparator (1).

4. A device according to claims 2 and 3, characterized in that the integrator receives a constant signal (G) an integrates it between instants defined by the signal which consists of a series of pulses ($H_l$).

5. A device according to claim 2, characterized in that the integrator receives an index signal ($\epsilon$) and integrates it between instants defined by the signal consisting of a series of pulses ($H_l$).

6. An electric supply system, characterized in that it comprises a regulation device according to one of the preceding claims.

7. A supply system according to claim 6 and connected to a source of energy in order to deliver a regulated output voltage ($V_S$), characterized in that it comprises a converter module (5) connected to the energy source ($V_E$) and comprising a transformer (51) whose primary winding is connected to a transistor (52) controlled by the regulation device (54), the output voltage ($V_S$) being delivered by the secondary winding of said transformer (51), a signal (I) representing the current which flows within the primary winding being applied to the regulation device.

8. A supply system according to claim 7, characterized in that the regulation device (54) also receives a signal constituting an index signal ($\epsilon$) obtained by comparison of the output voltage ($V_S$) with a reference value ($V_{REF}$).

**Ansprüche**

1. Stabilisierte Regeleinrichtung zur binären Regelung eines Signals (I) mit konstanter Periode ($T_o$), dadurch gekennzeichnet, daß die aufweist :

— Mittel (3) zur Erzeugung eines Sägezahnsignals ($S_D$, $S_M$) variabler Periode (T),

— einen Komparator (1), der das zu regelnde Signal (I) mit dem Sägezahnsignal vergleicht und ein Signal ($H_l$) liefert, das aus einer Reihe von Impulsen entsprechend den Zeitpunkten besteht, an denen der Wert des zu regelnden Signals (I) dem des Sägezahnsignals ($S_D$, $S_M$) entspricht, wobei diese Impulse den Mitteln (3) zur Erzeugung des Sägezahnsignals zugeführt werden und dessen Periode (T) bestimmen,

— eine bistabile Kippstufe (2), die ein Signal ($H_o$) konstanter Periode ($T_o$) und die genannten Impulse ($H_l$) zugeführt erhält und ein Steuersignal ($S_s$) für das zu regelnde Signal (I) liefert, wobei dieses Steuersignal die gleiche konstante Periode ($T_o$) und Rechteckform aufweist und seine Impulsbreite ($\theta$) durch die genannten Impulse ($H_l$) bestimmt ist.

2. Einrichtung nach Anspruch 1, dadurch gekennzeichnet, daß die Mittel (3) zur Erzeugung eines Sägezahnsignals ($S_D$), $S_M$) einen Integrator enthalten.

3. Einrichtung nach einem der vorhergehenden Ansprüche, dadurch gekennzeichnet, daß sir außerdem Addiermittel (4) zur Addition eines Sollsignals ($\epsilon$) zum Sägezahnsignal ($S_D$) aufweist und daß das resultierende Signal ($S_A$) an den Komparator (1) angelegt wird.

4. Einrichtung nach den Ansprüchen 2 und 3, dadurch gekennzeichnet, daß der Integrator ein konstantes Signal (G) zugeführt erhält und es zwischen Zeitpunkten integriert, die durch das eine Reihe von Impulsen ($H_l$) enthaltende Signal definiert sind.

5. Einrichtung nach Anspruch 2, dadurch gekennzeichnet, daß der Integrator ein Sollsignal ($\epsilon$) empfängt und es zwischen Zeitpunkten integriert, die durch das eine Reihe von Impulsen ($H_l$) enthaltende Signal definiert sind.

6. Elektrische Vorrichtung zur Stromversorgung, dadurch gekennzeichnet, daß sie eine Regeleinrichtung nach einem der vorhergehenden Ansprüche enthält.

7. Vorrichtung zur Stromversorgung nach Anspruch 6, die an eine Stromquelle angeschlossen ist und eine geregelte Ausgangsspannung ($V_S$) liefert, dadurch gekennzeichnet, daß sie einen Wandlermodul (5) aufweist, der an die Stromquelle ($V_E$) angeschlossen ist und einen Transformator (51) enthält, dessen Primärwicklung an einen von der Regeleinrichtung (54) gesteuerten Transistor (52) angeschlossen ist, während die Sekundärwicklung die Ausgangsspannung ($V_S$) liefert, wobei die Regeleinrichtung ein Signal (I) zugeführt erhält, das dem in der Primärwicklung fließenden Strom entspricht.

8. Vorrichtung zur Stromversorgung nach Anspruch 7, dadurch gekennzeichnet, daß die Regeleinrichtung (54) außerdem ein Signal zugeführt erhält, das ein Sollsignal ($\epsilon$) bildet und durch Vergleich der Ausgangsspannung ($V_S$) mit einem Bezugswert ($V_{REF}$) gebildet ist.

0 068 970

# FIG_1

# FIG_3

# FIG_4

0 068 970

# FIG_2

# FIG_5

# FIG_6